(19) Europäisches Patentamt / European Patent Office / Office européen des brevets

(11) **EP 1 548 413 B1**

(12) **FASCICULE DE BREVET EUROPEEN**

(45) Date de publication et mention
de la délivrance du brevet:
**20.07.2016   Bulletin 2016/29**

(51) Int Cl.:
***G01H 3/08*** *(2006.01)*

(21) Numéro de dépôt: **04027283.3**

(22) Date de dépôt: **17.11.2004**

(54) **Dispositif d'indication du niveau vibratoire d'un appareil**

Anlage zur Anzeige des Vibrationspegels eines Apparats

Device for indicating the vibration level of an apparatus

(84) Etats contractants désignés:
**CH GB IT LI**

(30) Priorité:  **22.12.2003   FR 0315152**

(43) Date de publication de la demande:
**29.06.2005   Bulletin 2005/26**

(73) Titulaire: **Airbus Helicopters
13725 Marignane Cedex (FR)**

(72) Inventeur: **Aubourg, Pierre-Antoine
13006 Marseille (FR)**

(74) Mandataire: **GPI & Associés
EuroParc de Pichaury
Bâtiment B2 - 1er Etage
1330, rue Guillibert de la Lauzière
13856 Aix-en-Provence Cedex 3 (FR)**

(56) Documents cités:
| | |
|---|---|
| WO-A2-02/095633 | DE-A- 10 133 987 |
| US-A- 3 747 703 | US-A- 3 758 758 |
| US-A- 3 945 256 | US-A- 5 163 011 |
| US-A- 6 026 348 | US-B1- 6 728 658 |

**Description**

La présente invention concerne un dispositif d'indication du niveau vibratoire d'un appareil.

Le domaine de l'invention est celui de l'analyse des vibrations, plus particulièrement lorsque l'appareil est pourvu d'un moteur entraînant un organe de propulsion rotatif. Un exemple type d'application de l'invention est l'hélicoptère, appareil qui présente un niveau vibratoire important essentiellement dû au rotor principal chargé d'assurer la sustentation et la mobilité.

Il est important de caractériser les vibrations présentes dans un tel appareil car celles-ci sont le signe de contraintes qui provoquent un phénomène de fatigue et qui ont donc une influence directe sur la sécurité. Les vibrations peuvent également dégrader les performances de divers équipements qui sont installés dans l'appareil. En outre, les vibrations dans la cabine d'un hélicoptère conditionnent le confort des passagers et du pilote. Il va sans dire que le confort du pilote est également un élément essentiel de la sécurité.

On connaît ainsi un système d'enregistrement en continu des vibrations au sein de l'hélicoptère, système connu sous le sigle HUMS (pour « Health Usage Monitoring System » en anglais). Le système enregistre une alarme dans une cartouche de surveillance amovible si le niveau vibratoire excède un seuil prédéterminé à la fréquence Ω, 2Ω ou BΩ, Ω représentant la vitesse de rotation du rotor et B le nombre de pales montées sur ce rotor. Cette alarme ne peut être détectée que dans une station au sol, équipée pour restituer les informations enregistrées dans la cartouche. Le pilote n'a pas accès à ces informations au cours de sa mission. De plus, aucun moyen n'est prévu pour fournir une appréciation globale du niveau vibratoire qui ne soit pas limitée à une fréquence identifiée mais qui plutôt reflète le comportement général de l'appareil.

Le document US3758758 décrit une analyse de vibrations employant les modulations de fréquence en divers points d'un dispositif rotatif pour installation volante, telle qu'un hélicoptère de faible tonnage. L'analyse comprend la comparaison de coefficients à des bandes de fréquences sélectionnées, d'une onde complexe représentant l'amplitude de vibration en un point sur le dispositif rotatif, avec des valeurs représentant des amplitudes de vibration, pris dans les limites de grandeur de vibration acceptable. Des étapes consistent à déterminer un coefficient distinct pour au moins deux bandes de fréquences. Une pondération de l'apparition du dépassement des coefficients au-dessus d'une limite supérieure est opérée. L'analyse vibratoire vise la localisation d'engrenages ou de roulements défectueux, et la localisation de pannes, en réduisant la quantité de données stockées.

Le document US6728658 décrit une analyse de vibrations pour le contrôle d'arbres de transmission de puissance pour des rotors d'hélicoptères. La détermination d'un indicateur de santé est associée à un composant pour obtenir une pluralité de classifications de santé. Une probabilité de garantie est associée à chaque classification de santé. L'analyse détermine, pour un ensemble donné de valeurs observées, quelle des classifications de santé est associée à tel composant en utilisant la probabilité associées aux classifications. Si une détermination d'indicateur n'est pas associée au composant, une détermination est répétée pour au moins une condition.

Le document WO02095633 décrit une méthode exécutée par un système informatique pour déterminer un indicateur de santé associé à une composante d'hélicoptère. La méthode détermine une pluralité de classifications de santé, pour au moins un indicateur d'état quantifiant une caractéristique fonctionnelle du composant. Une probabilité est associée à chacune des classifications de santé, cette probabilité étant une évaluation du composant pour une classification particulière et donnée. La présente invention a ainsi pour objet un dispositif qui indique, de préférence en temps réel, le niveau vibratoire d'un appareil sur un large spectre de fréquences au moyen d'une seule donnée.

Selon un exemple de l'invention, ce dispositif indique au moins un premier niveau vibratoire dérivant d'un premier signal d'accélération et il comprend :

- un premier moyen d'analyse pour décomposer le premier signal d'accélération en une pluralité de signaux d'analyse axiale chacun inscrit dans une bande de fréquence identifiée,

- une première mémoire dans laquelle est enregistrée une pluralité de coefficients de pondération axiale chacun correspondant à une de ces bandes de fréquences identifiée, et,

- un premier circuit de contrôle pour effectuer la somme des puissances pièmes des signaux d'analyse axiale pondérées par les coefficients de pondération axiale, produisant ainsi le premier niveau vibratoire.

De plus, le dispositif comprend un premier comparateur pour produire un premier signal d'alerte lorsque le premier niveau vibratoire excède un premier seuil prédéterminé.

En outre, ce dispositif comprend un premier organe de concentration ainsi agencé que la pluralité de signaux d'analyse axiale provient de plusieurs signaux de mesure chacun issu d'un capteur distinct.

Selon une première option, le premier organe de concentration effectue la somme de ces signaux de mesure.

Selon une deuxième option, le premier organe de concentration retient le plus élevé de ces signaux de mesure.

De préférence, le dispositif recevant un deuxième signal d'accélération, il comprend :

- un deuxième moyen d'analyse pour décomposer le deuxième signal d'accélération en une pluralité de signaux d'analyse radiale chacun inscrit dans une bande de fréquence identifiée,

- une deuxième mémoire dans laquelle est enregistrée une pluralité de coefficients de pondération radiale chacun correspondant à une de ces bandes de fréquences identifiées, et

- un deuxième circuit de contrôle CC pour effectuer la somme des puissances pièmes des signaux d'analyse radiale pondérées par les coefficients de pondération radiale afin de produire un deuxième niveau vibratoire.

De plus, ce dispositif comprend un deuxième comparateur pour produire un deuxième signal d'alerte lorsque le deuxième niveau vibratoire excède un deuxième seuil prédéterminé.

En outre, le dispositif comprend un deuxième organe de concentration ainsi agencé que la pluralité de signaux d'analyse radiale provient de plusieurs signaux d'évaluation chacun issu d'un capteur distinct.

Selon un premier mode de réalisation, le deuxième organe de concentration effectue la somme de ces signaux d'évaluation.

Selon un deuxième mode de réalisation, le deuxième organe de concentration retient le plus élevé de ces signaux d'évaluation.

Avantageusement, le dispositif comprend un organe de combinaison pour produire un signal d'alarme lorsqu'une combinaison des deux signaux d'alerte excède un troisième seuil prédéterminé.

A titre d'exemple, cet organe de combinaison réalise la somme des puissances qièmes des signaux d'alerte, la valeur de q étant de préférence égale à 1.

La présente invention apparaîtra maintenant avec plus de détails dans le cadre de la description qui soit d'exemples de réalisation donnés à titre illustratif en se référant aux figures annexées qui représentent :

- la figure 1, un module d'analyse selon l'invention

- la figure 2, un schéma d'un dispositif selon l'invention, et

- la figure 3, une représentation graphique des coefficients de pondération axiale et radiale.

Les éléments présents dans plusieurs figures sont affectés d'une seule et même référence.

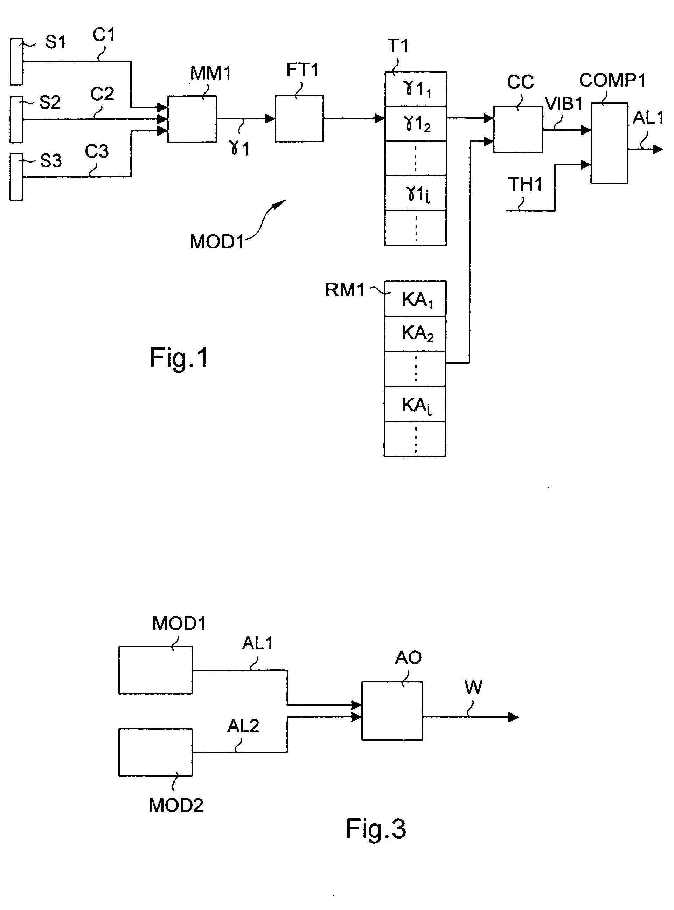

En référence à la figure 1, un premier module d'analyse MOD1 comporte un premier S1, un deuxième S2 et un troisième S3 capteurs qui sont disposés dans la cabine d'un hélicoptère pour mesurer les vibrations axiales, celles qui sont dirigées selon l'axe du rotor. Les trois capteurs délivrent respectivement un premier C1, un deuxième C2 et un troisième C3 signaux de mesure qui représentent l'accélération axiale à laquelle ils sont soumis. Les capteurs sont de préférence des accéléromètres ou des jauges de contrainte.

Un premier organe de concentration MM1 reçoit les trois signaux de mesure C1, C2, C3, et les combine pour former un premier signal d'accélération $\gamma 1$. Selon une première option, il effectue la somme de ces signaux de mesure.

Selon une deuxième option, il reproduit en tant que premier signal d'accélération le signal de mesure qui est le plus élevé.

Il convient de noter que l'invention s'applique également si un seul capteur est prévu, auquel cas celui-ci délivre directement le premier signal d'accélération $\gamma 1$ et le premier organe de concentration MM1 est supprimé.

Un premier moyen d'analyse FT1 effectue la transposition du premier signal d'accélération $\gamma 1$ du domaine temporel dans le domaine fréquentiel ; autrement dit, le moyen FT1 réalise la transformée de Fourier discrète de ce signal. Il produit ainsi, dans une première table T1, une pluralité de signaux d'analyse axiale $\gamma 1_1$, $\gamma 1_2$, ... $\gamma 1_i$, .... $\gamma 1_n$ qui donnent la valeur de l'accélération dans des bandes étroites de fréquences successives, la réunion de ces bandes définissant le domaine fréquentiel d'analyse.

Une première mémoire RM1 contient des coefficients de pondération axiale $KA_1$, $KA_2$, ...$KA_i$, ....$KA_n$ qui correspondent aux différentes bandes de fréquences identifiées par le premier moyen d'analyse FT1. Ces coefficients représentent l'importance relative d'une bande de fréquence dans le niveau vibratoire général de la cabine.

On comprend bien que certaines vibrations sont beaucoup plus gênantes que d'autres. Ainsi, si l'on souhaite étudier l'équilibrage du rotor de l'hélicoptère, les fréquences multiples de la vitesse de rotation sont particulièrement symptomatiques. Si l'on souhaite par contre privilégier le confort, on peut avantageusement se reporter à la norme ISO 2631 qui définit, pour une durée d'exposition donnée, le niveau de vibration maximal admissible en fonction de la fréquence.

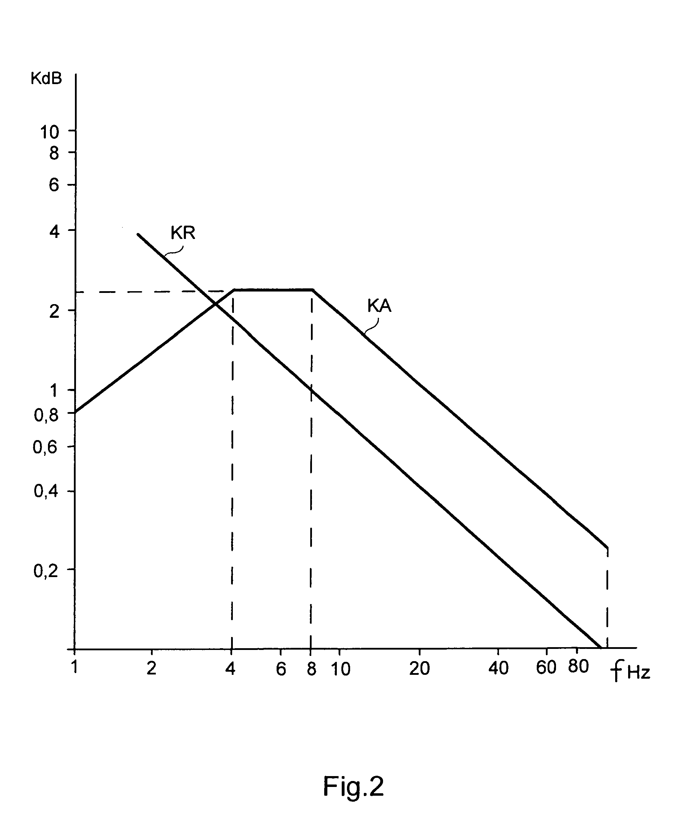

En référence à la figure 2, un moyen simple pour définir les coefficients KA de pondération axiale consiste, pour une fréquence (ou bande de fréquence) donnée, à retrancher d'une constante arbitraire la valeur correspondante du niveau maximal selon l'axe vertical ou axe z indiqué dans cette norme. Ainsi, en coordonnées logarithmiques, la représentation de KA en fonction de la fréquence s'apparente à une droite de pente croissante entre 1 Hz et 4Hz, suivie d'un palier entre 4 Hz et 8 Hz et se terminant par une droite de pente décroissante entre 8 Hz et 100 Hz.

Un premier circuit de contrôle CC produit un premier niveau vibratoire VIB1 en réalisant la somme des puissances pièmes des signaux d'analyse axiale $\gamma 1_i$ pondérées par les coefficients de pondération axiale $KA_i$ :

$$VIB1 = \sum_{i=1}^{n} KA_{i}.(\gamma 1_{i})^{p}$$

Avantageusement, p vaut 2.

Un premier comparateur COMP1 produit un premier signal d'alerte AL1 si le premier niveau vibratoire VIB1 excède un premier seuil prédéterminé TH1.

De préférence, le dispositif comprend un deuxième module d'analyse MOD2 pour produire un deuxième niveau vibratoire VIB2 et un deuxième signal d'alerte AL2. Ce deuxième module n'est pas détaillé dans le dessin annexé car il est analogue (en particulier identique) au premier module d'analyse.

Ce deuxième module d'analyse MOD2 comporte un quatrième, un cinquième et un sixième capteurs qui sont disposés dans la cabine pour mesurer les vibrations radiales, celles qui sont perpendiculaires à l'axe du rotor. Ces trois derniers capteurs délivrent un premier C1, un deuxième C2 et un troisième C3 signal d'évaluation ; ces signaux représentent l'accélération radiale à laquelle sont soumis les capteurs respectifs.

Un deuxième organe de concentration reçoit les trois signaux d'évaluation pour les combiner (selon une fonction) en un deuxième signal d'accélération ;de préférence, soit cet organe effectue la somme de ces signaux d'évaluation, soit il retient le signal qui est le plus élevé.

Un deuxième moyen d'analyse effectue la transposition du deuxième signal d'accélération du domaine temporel dans le domaine fréquentiel. Il produit ainsi dans une deuxième table une pluralité de signaux d'analyse radiale.

Une deuxième mémoire contient des coefficients de pondération radiale $KR_1$, $KR_2$, ...$KR_i$, ....$KR_n$ qui correspondent aux différentes bandes de fréquences identifiées par le deuxième moyen d'analyse.

En référence à la figure 2, un moyen simple pour définir les coefficients KR de pondération radiale consiste, pour une fréquence (ou bande de fréquence) donnée, à retrancher d'une constante arbitraire la valeur correspondante du niveau maximal selon l'axe x ou y, soit dans un plan horizontal. Ainsi, en coordonnées logarithmiques, la représentation de KR en fonction de la fréquence s'apparente à une droite de pente décroissante entre 1 Hz et 100 Hz.

Un deuxième circuit de contrôle produit un deuxième niveau vibratoire en réalisant la somme des puissances pièmes des signaux d'analyse radiale pondérées par les coefficients de pondération radiale. de préférence, ce circuit réalise la somme des puissances secondes (p=2) de ces signaux pondérés.

Un deuxième comparateur produit un deuxième signal d'alerte AL2 si le deuxième niveau vibratoire excède un deuxième seuil prédéterminé.

En référence à la figure 3, le dispositif selon l'invention comprend donc le premier MOD1 et le deuxième MOD2 modules d'analyse ainsi qu'un organe de combinaison AO. Cet organe produit un signal d'alarme W lorsqu'une quelconque combinaison des signaux d'alerte AL1, AL2 excède un troisième seuil prédéterminé. De préférence, cette combinaison est la somme des puissances qièmes des deux signaux d'alerte, une solution simple consistant à affecter la valeur 1 à q.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Dispositif d'indication du niveau vibratoire d'un hélicoptère comportant un rotor, pour produire un premier niveau vibratoire VIB1 dérivant d'un premier signal d'accélération $\gamma 1$, ce dispositif comprenant :

   - un premier moyen d'analyse FT1 adapté à décomposer ledit premier signal d'accélération $\gamma 1$ délivré par un ou plusieurs capteurs mesurant les vibrations dirigées selon l'axe du rotor en une pluralité de signaux d'analyse axiale chacun $\gamma 1_i$ inscrit dans une bande de fréquence identifiée $B_i$,
   - une première mémoire RM1 dans laquelle est enregistrée une pluralité de coefficients de pondération axiale chacun $KA_i$ correspondant à une desdites bandes de fréquences identifiée $B_i$, un circuit de contrôle CC pour effectuer la somme des puissances p[ièmes] desdits signaux d'analyse axiale $\gamma 1_i$ pondérées par lesdits coefficients de pondération axiale $KA_i$, produisant ainsi ledit premier niveau vibratoire VIB1 ; **caractérisé en ce que** le dispositif reçoit un deuxième signal d'accélération délivré par un ou plusieurs capteurs mesurant les vibrations dirigées perpendiculairement à l'axe du rotor, le dispositif comprenant :
   - un deuxième moyen d'analyse adapté à décomposer ledit deuxième signal d'accélération en une pluralité de signaux d'analyse radiale chacun inscrit dans une bande de fréquence identifiée,
   - une deuxième mémoire dans laquelle est enregistrée une pluralité de coefficients de pondération radiale chacun correspondant à une de ces bandes de fréquences identifiées, et
   - un deuxième circuit de contrôle adapté à effectuer la somme des puissances p[ièmes] desdits signaux d'analyse radiale pondérées par lesdits coefficients de pondération radiale afin de produire un deuxième niveau vibratoire.

**2.** Dispositif selon la revendication 1, **caractérisé en ce que** le circuit de contrôle CC effectue la somme des puissances 2$^{\text{ièmes}}$ desdits signaux d'analyse axiale.

**3.** Dispositif selon la revendication 1 ou 2, **caractérisé en ce qu'**il comprend un premier comparateur COMP1 pour produire un premier signal d'alerte AL1 lorsque ledit premier niveau vibratoire VIB1 excède un premier seuil prédéterminé TH1.

**4.** Dispositif selon l'une quelconque des revendications 1 à 3, **caractérisé en ce qu'**il comprend un premier organe de concentration MM1 ainsi agencé que ladite pluralité de signaux d'analyse axiale $\gamma 1_i$ provient de plusieurs signaux de mesure C1, C2, C3 chacun issu d'un capteur distinct S1, S2, S3.

**5.** Dispositif selon la revendication 4, **caractérisé en ce que** ledit premier organe de concentration MM1 effectue la somme desdits signaux de mesure C1, C2, C3.

**6.** Dispositif selon la revendication 4, **caractérisé en ce que** ledit premier organe de concentration MM1 retient le plus élevé desdits signaux de mesure C1, C2, C3.

**7.** Dispositif selon l'une quelconque des revendications 1 à 6, **caractérisé en ce que** le circuit de contrôle CC effectue la somme des puissances 2$^{\text{ièmes}}$ desdits signaux d'analyse radiale.

**8.** Dispositif selon l'une quelconque des revendications 1 à 7, **caractérisé en ce qu'**il comprend un deuxième comparateur pour produire un deuxième signal d'alerte AL2 lorsque ledit deuxième niveau vibratoire excède un deuxième seuil prédéterminé.

**9.** Dispositif selon l'une quelconque des revendications 1 à 8, **caractérisé en ce qu'**il comprend un deuxième organe de concentration ainsi agencé que ladite pluralité de signaux d'analyse radiale provient de plusieurs signaux d'évaluation chacun issu d'un capteur distinct.

**10.** Dispositif selon la revendication 8, **caractérisé en ce que** ledit deuxième organe de concentration effectue la somme desdits signaux d'évaluation.

**11.** Dispositif selon la revendication 9, **caractérisé en ce que** ledit deuxième organe de concentration retient le plus élevé desdits signaux d'évaluation.

**12.** Dispositif selon la revendication 1, **caractérisé en ce qu'**il comprend un premier comparateur COMP1 pour produire un premier signal d'alerte AL1 lorsque ledit premier niveau vibratoire VIB1 excède un premier seuil prédéterminé TH1, un deuxième comparateur pour produire un deuxième signal d'alerte AL2 lorsque ledit deuxième niveau vibratoire excède un deuxième seuil prédéterminé et un organe de combinaison AO pour produire un signal d'alarme W lorsqu'une combinaison desdits signaux d'alerte AL1, AL2 excède un troisième seuil prédéterminé.

**13.** Dispositif selon la revendication 12, **caractérisé en ce que** ledit organe de combinaison AO réalise la somme des puissances q$^{\text{ièmes}}$ desdits signaux d'alerte AL1, AL2.

**14.** Dispositif selon la revendication 13, **caractérisé en ce que** la valeur de q est égale à 1.

**Patentansprüche**

**1.** Vorrichtung zur Anzeige des Vibrationspegels eines Hubschraubers mit einem Rotor zum Darstellen eines ersten Vibrationspegels VIB1, der sich aus einem ersten Beschleunigungssignal $\gamma 1$ ergibt, wobei die Vorrichtung aufweist:

- ein erstes Analysemittel FT1, das ausgebildet ist zum Zerlegen des ersten Beschleunigungssignals $\gamma 1$, das von einem oder mehreren Sensoren geliefert wird, die die Vibrationen messen, die entlang der Achse des Rotors gerichtet sind, in eine Mehrzahl von axialen Analysesignalen $\gamma 1_i$, die sich in einem bestimmten Frequenzband $B_i$ befinden,
- einen ersten Speicher RM1, in dem eine Mehrzahl von axialen Wichtungskoeffizienten $KA_i$ gespeichert sind, wobei jeder von diesen einem der bestimmten Frequenzbänder $B_i$ entspricht,
- eine Steuerschaltung CC zum Ausführen der Summe der p-ten Potenzen dieser axialen Analysesignale $\gamma 1_i$, die durch die axialen Wichtungskoeffizienten $KA_i$ gewichtet sind, wodurch der erste Vibrationspegel VIB1 erzeugt wird,

**dadurch gekennzeichnet, dass** die Vorrichtung ein zweites Beschleunigungssignal empfängt, das von einem oder mehreren Sensoren geliefert wird, die die Vibrationen messen, die senkrecht zu der Rotorachse ausgerichtet sind, wobei die Vorrichtung aufweist:

- ein zweites Analysemittel, das ausgebildet ist zum Zerlegen des zweiten Beschleunigungssignals in eine Mehrzahl von radialen Analysesignalen, die sich jeweils in einem bestimmten Frequenzband befinden,
- einen zweiten Speicher, in dem eine Mehrzahl von radialen Wichtungskoeffizienten gespeichert ist, die jeweils einem dieser bestimmten Frequenzbänder entsprechen, und
- eine zweite Steuerschaltung, die ausgebildet ist, um die Summierung der p-ten Potenzen dieser radialen Analysesignale auszuführen, die durch die radialen Wichtungskoeffizienten gewichtet sind, um einen zweiten Vibrationspegel zu erzeugen.

2. Vorrichtung nach Anspruch 1,
**dadurch gekennzeichnet, dass** die Steuerschaltung CC die Summe der zweiten Potenzen der axialen Analysesignale ausführt.

3. Vorrichtung nach Anspruch 1 oder 2,
**dadurch gekennzeichnet, dass** sie einen ersten Vergleicher COMP1 aufweist zum Erzeugen eines ersten Warnsignals AL1, wenn der erste Vibrationspegel VIB1 einen ersten vorbestimmten Schwellenwert TH1 überschreitet.

4. Vorrichtung nach einem der Ansprüche 1 bis 3,
**dadurch gekennzeichnet, dass** sie ein erstes Konzentrationselement MM1 aufweist, das so angeordnet ist, dass die Mehrzahl der axialen Analysesignale $\gamma 1_i$ von mehreren Messsignalen C1, C2, C3 stammen, die jeweils von einem verschiedenen Sensor S1, S2, S3 ausgegeben werden.

5. Vorrichtung nach Anspruch 4,
**dadurch gekennzeichnet, dass** das erste Konzentrationselement MM1 die Messsignale C1, C2, C3 summiert.

6. Vorrichtung nach Anspruch 4,
**dadurch gekennzeichnet, dass** das erste Konzentrationselement MM1 das größte der Messsignale C1, C2, C3 berücksichtigt.

7. Vorrichtung nach einem der Ansprüche 1 bis 6,
**dadurch gekennzeichnet, dass** die Steuerschaltung CC die Summierung der zweiten Potenzen der radialen Analysesignale vornimmt.

8. Vorrichtung nach einem der Ansprüche 1 bis 7,
**dadurch gekennzeichnet, dass** sie einen zweiten Vergleicher aufweist zum Erzeugen eines zweiten Alarmsignals AL2, wenn der zweite Vibrationspegel einen zweiten vorbestimmten Schwellenwert überschreitet.

9. Vorrichtung nach einem der Ansprüche 1 bis 8,

**dadurch gekennzeichnet, dass** sie ein zweites Konzentrationselement aufweist, das so angeordnet ist, dass die Mehrzahl von radialen Analysesignalen von mehreren Auswertungssignalen stammt, die jeweils von einem verschiedenen Sensor abgegeben werden.

10. Vorrichtung nach Anspruch 8,
**dadurch gekennzeichnet, dass** das zweite Konzentrationselement die Summe der Auswertungssignale bildet.

11. Vorrichtung nach Anspruch 9,
**dadurch gekennzeichnet, dass** das zweite Konzentrationselement das größte der Auswertungssignale berücksichtigt.

12. Vorrichtung nach Anspruch 1,
**dadurch gekennzeichnet, dass** sie einen ersten Vergleicher COMP1 aufweist zum Erzeugen eines ersten Alarmsignals AL1, wenn der erste Vibrationspegel VIB1 einen ersten vorbestimmten Schwellenwert TH1 überschreitet, einen zweiten Vergleicher zum Erzeugen eines zweiten Alarmsignals AL2, wenn der zweite Vibrationspegel einen zweiten vorbestimmten Schwellenwert überschreitet, und ein Kombinationselement AO zum Erzeugen eines Alarmsignals W, wenn eine Kombination der Alarmsignale AL1, AL2 einen dritten vorbestimmten Schwellenwert überschreitet.

13. Vorrichtung nach Anspruch 12,
**dadurch gekennzeichnet, dass** das Kombinationselement AO die Summe der q-ten Potenzen der Alarmsignale AL1, AL2 bildet.

14. Vorrichtung nach Anspruch 13,
**dadurch gekennzeichnet, dass** der Wert von q gleich 1 ist.

**Claims**

1. Device for indicating the vibration level of a helicopter comprising a rotor, for producing a first vibration level VIB1 derived from a first acceleration signal $\gamma 1$, this device comprising:

   - a first analysis means FT1 adapted for resolving said first acceleration signal $\gamma 1$ delivered by one or more sensors measuring the vibrations directed along the axis of the rotor into a plurality of axial analysis signals, each $\gamma 1_i$ included in an identified frequency band $B_i$,
   - a first memory RM1 in which are recorded a plurality of axial weighting coefficients, each $KA_i$ corresponding to one of said identified frequency bands $B_i$,

- a control circuit CC for summing the $p^{th}$ powers of said axial analysis signals $\gamma 1_i$ weighted by said axial weighting coefficients $KA_i$, thereby producing said first vibration level VIB1; **characterised in that** the device receives a second acceleration signal delivered by one or more sensors measuring the vibrations directed perpendicularly to the axis of the rotor, the device comprising:

> - a second analysis means adapted for resolving said second acceleration signal into a plurality of radial analysis signals, each included in an identified frequency band,
> - a second memory in which are recorded a plurality of radial weighting coefficients, each corresponding to one of said identified frequency bands, and
> - a second control circuit adapted for summing the $p^{th}$ powers of said radial analysis signals weighted by said radial weighting coefficients in order to produce a second vibration level.

2. Device according to claim 1,
   **characterised in that** the control circuit CC sums the $2^{nd}$ powers of said axial analysis signals.

3. Device according to claim 1 or 2,
   **characterised in that** it comprises a first comparator COMP1 for producing a first alert signal AL1 when said first vibration level VIB1 exceeds a first predetermined threshold TH1.

4. Device according to any one of claims 1 to 3,
   **characterised in that** it comprises a first concentration member MM1 arranged so that said plurality of axial analysis signals $\gamma 1_i$ come from a plurality of measurement signals C1, C2, C3, each issuing from a distinct sensor S1, S2, S3.

5. Device according to claim 4,
   **characterised in that** said first concentration member MM1 sums said measurement signals C1, C2, C3.

6. Device according to claim 4,
   **characterised in that** said first concentration member MM1 retains the greatest of said measurement signals C1, C2, C3.

7. Device according to any one of claims 1 to 6,
   **characterised in that** the control circuit CC sums the $2^{nd}$ powers of said radial analysis signals.

8. Device according to any one of claims 1 to 7,
   **characterised in that** it comprises a second comparator for producing a second alert signal AL2 when said second vibration level exceeds a second predetermined threshold.

9. Device according to any one of claims 1 to 8,
   **characterised in that** it comprises a second concentration member arranged so that said plurality of radial analysis signals come from a plurality of evaluation signals, each issuing from a distinct sensor.

10. Device according to claim 8,
    **characterised in that** said second concentration member sums said evaluation signals.

11. Device according to claim 9,
    **characterised in that** said second concentration member retains the greatest of said evaluation signals.

12. Device according to claim 1,
    **characterised in that** it comprises a first comparator COMP1 for producing a first alert signal AL1 when said first vibration level VIB1 exceeds a first predetermined threshold TH1, a second comparator for producing a second alert signal AL2 when said second vibration level exceeds a second predetermined threshold and a combination member AO for producing an alarm signal W when a combination of said alert signals AL1, AL2 exceeds a third predetermined threshold.

13. Device according to claim 12,
    **characterised in that** said combination member AO sums the $q^{th}$ powers of said alert signals AL1, AL2.

14. Device according to claim 13,
    **characterised in that** the value of q is equal to 1.

Fig.1

Fig.3

Fig.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3758758 A
- US 6728658 B

- WO 02095633 A